# EUROPEAN PATENT SPECIFICATION

(11) **EP 3 826 145 B1**
(45) Date of publication and mention of the grant of the patent: **29.04.2026**
(21) Application number: 19837175.9
(22) Date of filing: 19.06.2019
(51) Int. Cl.: H02K 1/276, H02K 29/03

(54) **ROTARY ELECTRIC MACHINE, ROTARY ELECTRIC MOTOR DRIVE SYSTEM, AND ELECTRIC VEHICLE**
ELEKTRISCHE DREHMASCHINE, ANTRIEBSSYSTEM FÜR ELEKTRISCHE DREHMASCHINE UND ELEKTROFAHRZEUG
MACHINE ÉLECTRIQUE TOURNANTE, SYSTÈME D'ENTRAÎNEMENT DE MOTEUR ÉLECTRIQUE TOURNANT ET VÉHICULE ÉLECTRIQUE

(30) Priority: 17.07.2018 JP 2018134219
(43) Date of publication of application: 26.05.2021
(73) Proprietor: Hitachi Industrial Products, Ltd., Tokyo 101-0021 (JP)
(72) Inventor: ITO, Makoto, Tokyo 100-8280 (JP); TAKAHASHI, Akeshi, Tokyo 100-8280 (JP); SUGIMOTO, Shinji, Tokyo 100-8280 (JP); TAMIYA, Shuichi, Tokyo 100-8280 (JP); KUSHIDA, Takatoshi, Tokyo 100-8280 (JP)
(74) Representative: MERH-IP Matias Erny Reichl Hoffmann Patentanwälte PartG mbB
(86) International application number: PCT/JP2019/024337
(87) International publication number: WO 2020/017227

(56) References cited:
- WO-A1-2013/073263
- JP-A- 2002 118 994
- JP-A- 2002 118 994
- JP-A- 2010 183 648
- US-A1- 2014 246 939

## Description

### Technical Field

The present invention relates to a rotary electric machine, a rotary electric motor drive system, and an electric vehicle provided with the rotary electric machine.

### Background Art

A driving motor that is a rotary electric machine for use in an electric vehicle, such as an electric automobile and an electric railway vehicle, is required to have large output, and a permanent magnet motor into which a permanent magnet that holds a magnetic energy is incorporated is thus used. In particular, the driving motor is required to have higher efficiency in a wide operation range including low speed large torque, high speed low torque, and the like, so that an interior permanent magnet motor that can satisfy these characteristics is typically used. Further, the driving motor for the electric vehicle requires, in addition to these characteristics, reduction in vibration and noise. For the reduced vibration and noise, reduction in torque pulsation of the interior permanent magnet motor becomes a problem.

With respect to this, a technique described in Patent Literature 1 has been known. In this technique, the angles formed by the rotor surface positions of the permanent magnets, of which the magnetic poles are switched from the N-pole to the S-pole, or, from the S-pole to the N-pole, arranged in the rotor, are different from each other. When the rotor having this configuration rotates, time delay occurs in the order in which the respective magnetic pole switching portions pass through the slots disposed side by side on the stator side. This reduces cogging torque.

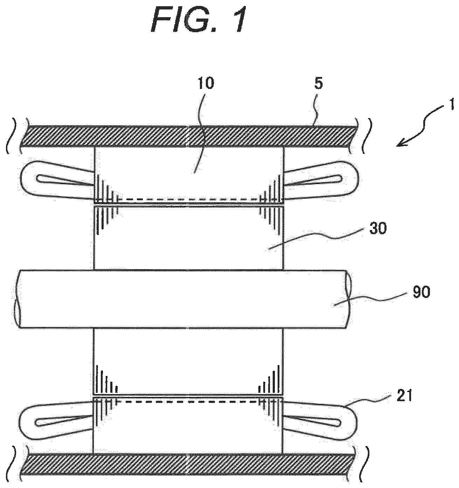

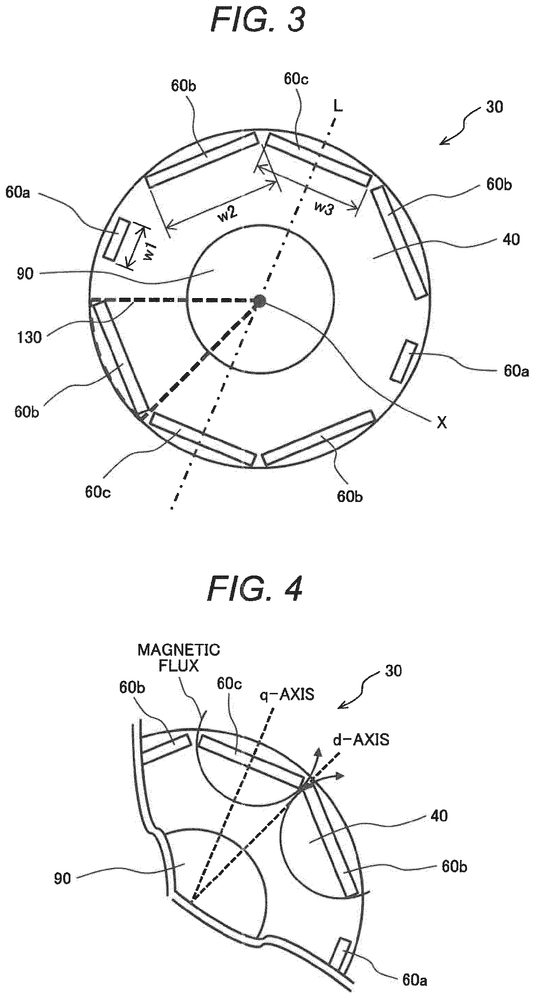

Additionally, Patent Literature 1 discloses the rotor in which the widths of the permanent magnets are different for the respective magnetic poles (Figure 1), and the rotor in which the magnet widths are constant, but the widths of the slits into which the permanent magnets are buried are different from each other (Figure 3).

### Citation List

Patent Literature 2 discloses motor including a rotor that includes a rotor core provided with a plurality of permanent magnets in a circumferential direction; and a stator that includes a stator core on which multi-phase stator coils are wound and is arranged facing the rotor with a predetermined air gap therebetween. The rotor has a structure in which the change pattern of magnetic properties of the rotor core or the permanent magnets changes stepwise in the circumferential direction.

### Patent Literature

Patent Literature 1: Japanese Unexamined Patent Application Publication No. 2002-118994
Patent Literature 2: US 2014/0246939 A1

### Summary of Invention

### Technical Problem

In the above conventional technique, although the reduction in torque pulsation including the cogging torque is enabled, there is a problem that rotation direction dependency of torque is generated. Consequently, the driving control of the electric motor for use in the electric vehicle becomes complicated.

Accordingly, the present invention as defined by claim 1 provides a rotary electric machine that enables reduction in torque pulsation without generating rotation direction dependency of torque, and a rotary electric motor drive system and an electric vehicle provided with the rotary electric machine. Solution to Problem

To solve the above problems, a rotary electric machine according to the present invention includes a stator and a rotor that opposes the stator. The number of poles of the rotor is six or more. A cross-sectional shape of the rotor is configured such that partial cross-sectional shapes (partial core cross-sectional shapes) each corresponding to one pole pitch, the number of which is equal to the number of poles, are arranged. The partial cross-sectional shapes, the number of which is equal to the number of poles, include three or more types of shapes that are different from each other. The cross-sectional shape of the rotor has line symmetry.

To solve the above problems, a rotary electric motor drive system according to the present invention includes a rotary electric machine that drives a load, and a power converter that drives the rotary electric machine. The rotary electric machine is the rotary electric machine according to the present invention.

To solve the above problems, an electric automobile according to the present invention includes a rotary electric machine, a battery, and a power converter that converts DC power of the battery to AC power and supplies the AC power to the rotary electric machine, the torque of the rotary electric machine being transmitted to a wheel via a transmission. The rotary electric machine is the rotary electric machine according to the present invention.

To solve the above problems, an electric railway vehicle according to the present invention includes a rotary electric machine, and a wheel that is driven by the rotary electric machine via a gear. The rotary electric machine is the rotary electric machine according to the present invention.

### Advantageous Effects of Invention

According to the present invention, the reduction in torque pulsation is enabled without generating the rotation direction dependency of torque. This can reduce power loss and noise that are caused in the rotary electric motor drive system and the electric vehicle.

Objects, configurations, and effects other than the above will be apparent from the description of the following embodiments.

### Brief Description of Drawings

Figure 1 illustrates the overall configuration of a rotary electric machine according to Example 1.
Figure 2 is a cross-sectional view of the rotary electric machine in Figure 1.
Figure 3 is a cross-sectional view of a rotor of the rotary electric machine according to a modification example.
Figure 4 illustrates a partial cross-sectional view of the rotor in Figure 3.
Figure 5 is a cross-sectional view of the rotor of the rotary electric machine according to another modification example.
Figure 6 illustrates a partial cross-sectional view of the rotor in Figure 5.
Figure 7 illustrates a cross-sectional view of the rotary electric machine according to a comparative example.
Figure 8 illustrates the relationship between the motor current and the ratio between torque average values according to the comparative example.
Figure 9 illustrates the torque waveforms during light load according to the comparative example.
Figure 10 illustrates the torque waveforms during heavy load according to the comparative example.
Figure 11 illustrates the relationship between the motor current and the ratio between torque average values according to Example 1.
Figure 12 illustrates the torque waveforms during the light load according to Example 1.
Figure 13 illustrates the torque waveforms during the heavy load according to Example 1.
Figure 14 illustrates the magnetic flux distributions of Example 1 during forward rotation and during reverse rotation.
Figure 15 illustrates the magnetic flux distributions of the comparative example during the forward rotation and during the reverse rotation.
Figure 16 is a cross-sectional view of the rotor of the rotary electric machine according to Example 2.
Figure 17 illustrates the schematic configuration of a rotary electric motor drive system according to Example 3.
Figure 18 illustrates the schematic configuration of an electric automobile according to Example 4.
Figure 19 illustrates the schematic configuration of an electric railway vehicle according to Example 5. Description of Embodiments

Hereinafter, embodiments of the present invention will be described from Examples 1 to 5 described below with reference to the drawings. In the respective drawings, those denoted by the same reference numerals indicate the same components or components provided with similar functions. Additionally, a rotary electric machine according to each of the examples is an interior permanent magnet synchronous motor. Also, the rotary electric machine according to each of the examples is a so-called inner rotor type rotary electric machine.

### <Example 1>

Figure 1 illustrates the overall configuration of the rotary electric machine according to Example 1 of the present invention. Figure 1 is a cross-sectional view of the rotary electric machine in the plane parallel to a rotation shaft.

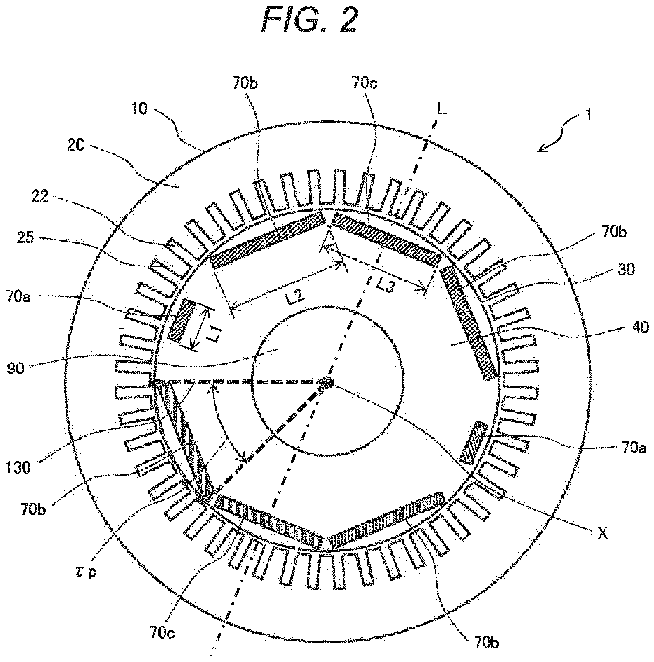

As illustrated in Figure 1, a rotary electric machine 1 includes a stator 10, a rotor 30 that is rotatably supported on the inner side in the radius direction of the stator 10, a shaft 90 that is fixed to the rotor 30, and a frame 5 that covers the stator 10 and the rotor 30. The rotor 30 opposes the stator 10 via a gap 100 (air gap). The stator 10 is provided with a stator winding 21 that is wound around a stator slot 22 described later ("22" in Figure 2).

Figure 2 is a cross-sectional view of the rotary electric machine 1 in Figure 1 in the plane perpendicular to the rotation shaft.

In Figure 2, the rotor 30 rotates about a rotation axis X. Additionally, unless otherwise specified, the description of the "inner circumference side" means the side that is close to the rotation axis X, and the description of the "outer circumference side" means the side that is far from the rotation axis X. Also, the description of the "radius direction" means the straight direction that intersects perpendicularly to the rotation axis X, and the description of the "circumference direction" means the rotation direction about the rotation axis X.

As illustrated in Figure 2, the rotor 30 includes a rotor core 40 including a magnetic material, and the shaft 90 that is the rotation shaft of the rotor 30 and penetrates through the rotor core 40. Also, the rotor 30 has an even number of (in Figure 2, eight) and six or more (in Figure 2, eight) magnetic poles. Each of the magnetic poles has at least one (in Figure 2, one) magnet insertion hole. A permanent magnet (70a, 70b, or 70c) is accommodated in the magnet insertion hole in order to configure the magnetic pole. Additionally, in Example 1, the width of the magnet insertion hole in the circumference direction is slightly larger than the width (L1, L2, or L3) of the permanent magnet (70a, 70b, or 70c) in the circumference direction in order to accommodate the permanent magnet (70a, 70b, or 70c), but both widths are substantially equal to each other.

The stator 10 is provided with a stator core 20 including a magnetic material. The stator core 20 has stator teeth 25 that are located on the inner circumference side and oppose the rotor 30. The stator winding, not illustrated, passes through the stator slot 22 that is the space between two adjacent stator teeth 25. Additionally, in Example 1, the number of stator slots 22 is 48.

As illustrated in Figure 2, the rotor 30 is a so-called collection of portions having partial cross-sectional shapes 130 having an outer shape in a substantially fan shape and each corresponding to one pole pitch (angle τp) (in the drawing, the region surrounded by the dashed line). In the circumference direction of the rotor 30, three or more types of the partial cross-sectional shapes 130 that are different from each other are preferably arranged, and in Example 1, three types of the partial cross-sectional shapes 130 are arranged. In the three types of the partial cross-sectional shapes 130, cross-sectional shapes of the permanent magnets are different from each other, and in Figure 2, the widths of the permanent magnets in the circumference direction are different from each other. That is, the number of types of the widths of the permanent magnets is three: the width L1 of the permanent magnet 70a, the width L2 of the permanent magnet 70b, and the width L3 of the permanent magnet 70c. Additionally, between the L1, L2, and L3, there is a relationship in which L1 < L3 < L2.

Here, the three types of the partial cross-sectional shapes 130, the number of which is equal to the number of (eight) poles, are arranged in a cross section of the rotor 30 such that the shape of the cross section (the pattern shape including the cross-sectional shapes of the permanent magnets, apertures (described later), and the like) has line symmetry in which the straight line that passes through the rotation axis X and is orthogonal to the rotation shaft is a symmetry axis. In Example 1, two partial cross-sectional shapes 130 having the magnet width L1, four partial cross-sectional shapes 130 having the magnet width L2, and two partial cross-sectional shapes 130 having the magnet width L3 are arranged in line symmetry with respect to a symmetry axis L that passes through the centers in the width direction of the two magnet cross sections having the magnet width L3 that are opposite to each other in the rotor 30. Thus, the cross-sectional shape of the rotor 30 has the line symmetry.

Additionally, the straight line orthogonal to the symmetry axis L, that is, the straight line that passes though the centers in the width direction of the two magnet cross sections having the magnet width L1 that are opposite to each other in the rotor 30 also becomes the symmetry axis. That is, in this example, the two magnet cross sections having the magnet width L3 are arranged on the symmetry axis L, the two magnet cross sections having the magnet width L1 are arranged on the straight line orthogonal to the symmetry axis L, and each of the four magnet cross sections having the magnet width L2 is arranged between both the magnet cross section having the magnet width L1 and the magnet cross section having the magnet width L3 (four locations). Therefore, the magnet widths in two partial cross-sectional shapes 130 adjacent to each of the four magnet cross sections having the magnet width are different from each other.

Also, the arranging order in the circumference direction of the magnet widths in the three types of (the magnet widths L1 to L3) and eight partial cross-sectional shapes 130 is the order of L3, L2, L1, L2, L3, L2, L1, L2, and L3 clockwise in Figure 2, with one of the two magnet cross sections having the magnet width L3 located on the symmetry axis L as a start point and an end point. Additionally, not only the magnet cross sections having the magnet widths L1 and L3 but also the two magnet cross sections having the magnet width L2 that are opposite to each other, are located on the straight line that passes through the centers in the width direction of these two magnet cross sections having the magnet width L2. Therefore, the shape of the cross section of the rotor 30 has rotational symmetry of two-fold symmetry with the rotation axis X as the rotation center (one of two cross-sectional shapes located on the symmetry axis L overlaps with the other cross-sectional shape opposite to the one cross-sectional shape with respect to the rotation of 180°, and overlaps with the one cross-sectional shape with respect to the rotation of 360°).

As described above, the shape of the cross section of the rotor 30 includes the partial cross-sectional shapes 130 having an outer shape in a substantially fan shape and each corresponding to one pole pitch (τp) so as to have the line symmetry, and the three or more types of the partial cross-sectional shapes 130 that are different from each other, the number of which is equal to the number of poles, are arranged, so that as described later, rotation direction dependency of the magnetic flux distribution is prevented. This enables reduction in torque pulsation without generating the rotation direction dependency of torque. In this example, further, the partial cross-sectional shapes 130, the number of which is equal to the number of poles, are arranged so as to have the rotational symmetry. This reliably prevents the rotation direction dependency of the magnetic flux distribution.

Additionally, the relationship between the L1, L2, and L3 in Figure 2 is not limited to L1 < L3 < L2 in this example, and may be, for example, L1 < L2 < L3.

For the permanent magnets 70a to 70c, any one of a ferrite magnetic material, a neodymium magnetic material, a samarium cobalt magnetic material, and the like may be used. Also, the permanent magnets 70a to 70c of Example 1 have a rectangular shape in the cross section in Figure 2, but are not limited to this, and may have an arc shape. Further, a bonded magnet (a plastic magnet or a rubber magnet) may be injection filled into each magnet insertion hole 50. Also, the permanent magnet per pole may be divided into a plurality of sections in the radius direction or in the circumference direction.

As the magnetic material that configures the rotor core 40, to reduce eddy current loss caused in the rotor core 40, a lamination body of magnetic steel plates laminated with an electric insulator is preferably applied. Additionally, to reduce the material cost and the processing cost, a solid (bulk) magnetic body may be used. Also, the rotor core 40 may be configured by compressing and molding a powder magnetic material, such as a powder magnetic core, or may be configured of an amorphous metal or a nanocrystalline material. The rotor core 40 is fixed to the shaft 90 by means of adhesion, welding, press fitting, shrink fitting, and the like. When the rotor core 40 is configured of the solid (bulk) magnetic material, the rotor core 40 and the shaft 90 may be integrally molded. Also, in Figure 2, the cross-sectional shape of the magnet insertion hole 50 has a rectangular shape, but is not limited to this, and may have a substantially V-shape, a substantially arc shape, and the like.

Also, as the material of the stator core 20, to reduce eddy current loss caused in the stator core 20, a lamination body of magnetic steel plates laminated with an electric insulator is preferably applied. Additionally, to reduce the material cost and the processing cost, a solid (bulk) magnetic material may be used. Also, the stator core 20 may be configured by compressing and molding a powder magnetic material, such as a powder magnetic core, or may be configured of an amorphous metal or a nanocrystalline material. The stator core 20 and the frame 5 are fixed by using means of adhesion, welding, press fitting, shrink fitting, and the like.

A modification example of Example 1 will be described with reference to Figures 3 to 6. Additionally, the point that is different from Example 1 will be mainly described.

Figure 3 is a cross-sectional view of the rotor of the rotary electric machine according to the modification example of Example 1 in the plane perpendicular to the rotation shaft. This modification example is a so-called reluctance motor in which no permanent magnets are buried into the rotor core 40. The configuration other than the rotor core is the same as Example 1 described above.

The rotor 30 according to the modification example in Figure 3 includes the rotor core 40 including a magnetic material, and the shaft 90 that is the rotation shaft of the rotor 30 and penetrates through the rotor core 40. Also, the rotor 30 has an even number (in Figure 3, eight) of apertures (60a to 60c) arranged in the circumference direction on the outer circumference side. These apertures become magnetic barriers, so that the rotor 30 has six or more (in Figure 3, eight) magnetic poles (salient-pole). That is, the rotor 30 has saliency by the apertures 60a to 60c in the rotor core 40.

The interiors of the apertures 60a to 60c may be in a vacuum, or may be filled with a gas, such as air, a resin, a non-magnetic material, and the like. That is, the relative permeability in the aperture is smaller than the relative permeability of the rotor core 40.

The rotor 30 of this modification example is, so to speak, a rotor in Example 1 (Figure 2) from which the permanent magnets 70a to 70c are removed. That is, the width w1 of the aperture 60a in the circumference direction corresponds to the magnet width L1 in Example 1 (Figure 2), the width w2 of the aperture 60b in the circumference direction corresponds to the magnet width L2 in Example 1 (Figure 2), and the width w3 of the aperture 60c in the circumference direction corresponds to the magnet width L3 in Example 1 (Figure 2). Therefore, in this modification example, between the aperture widths w1, w2, and w3, there is a relationship in which w1 < w3 < w2.

Therefore, like Example 1, in the cross section of the rotor 30 of this modification example, the three types of the partial cross-sectional shapes 130 that are different from each other are arranged in the circumference direction. Additionally, in the three types of the partial cross-sectional shapes 130 according to this modification example, the cross-sectional shapes of the apertures in the circumference direction, that is, the aperture widths (w1, w2, w3), are different from each other. Also, like Example 1, the three types of and eight partial cross-sectional shapes 130 are arranged in line symmetry with respect to the symmetry axis L in Figure 3, and are arranged in two-fold rotational symmetry with the rotation axis X as the rotation center. Like Example 1, this enables the reduction in torque pulsation without generating the rotation direction dependency of torque.

Figure 4 illustrates a partial cross-sectional view of the rotor 30 in Figure 3 in the plane perpendicular to the rotation shaft.

The magnitude of the reluctance of the rotor 30 is different according to the rotor position by each of the apertures 60a to 60c. Accordingly, the direction in which the reluctance that passes through between the apertures, that is, through each of the magnetic poles (salient-pole) is minimum is defined as a d-axis, and the direction orthogonal to the d-axis at an electrical angle, that is, the direction that passes through the center in the width direction of the aperture, is defined as a q-axis. That is, in each of the partial cross-sectional shapes 130, the d-axis and the q-axis can be defined. As long as the cross section of the rotor does not have an extremely distorted shape, the d-axes are in a relationship in which they are shifted at an electrical angle of 180°, and likewise, the q-axes are in a relationship in which they are shifted at an electrical angle of 180°, which is ditto for this modification example. In this modification example, the d-axis of any partial cross-sectional shape 130 that is selected can be defined as the d-axis of the rotor 30, and the q-axis of any partial cross-sectional shape 130 that is selected can be defined as the q-axis of the rotor 30.

As described above, in the cross section of the rotor 30 illustrated in Figure 3, the three or more types of the partial cross-sectional shapes 130 that are different from each other are arranged in line symmetry with respect to the symmetry axis L in Figure 3. In this case, the symmetry axis L is preferably the d-axis or the q-axis. Additionally, in this modification example, as seen from Figures 3 and 4, the symmetry axis L is the q-axis.

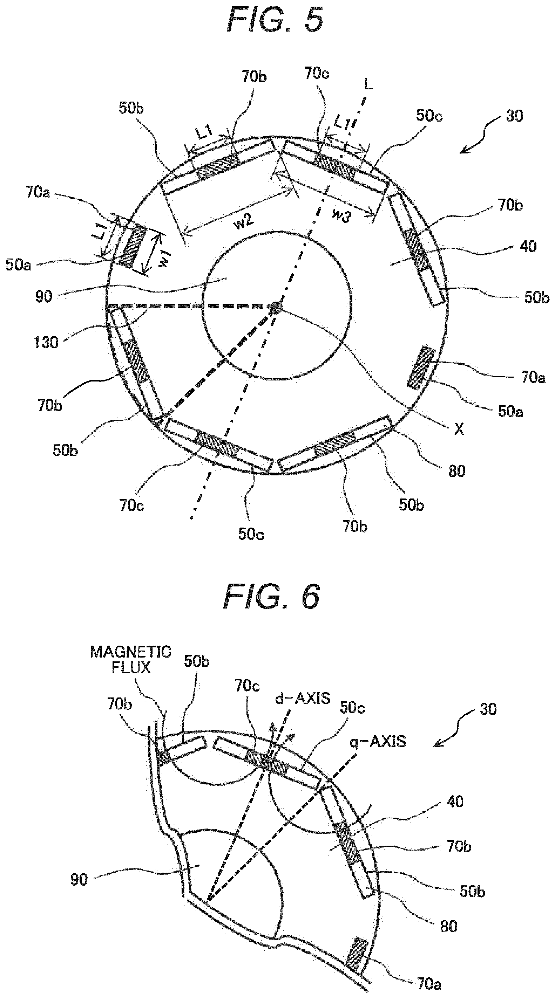

Figure 5 is a cross-sectional view of the rotor of the rotary electric machine according to another modification example of Example 1 in the plane perpendicular to the rotation shaft. The rotary electric machine of this modification example is the interior permanent magnet synchronous motor that is of the inner rotor type.

The rotor 30 according to the modification example in Figure 5 includes the rotor core 40 including a magnetic material, and the shaft 90 that is the rotation shaft of the rotor 30 and penetrates through the rotor core 40. Also, the rotor 30 has an even number (in Figure 5, eight) of and six or more (in Figure 5, eight) magnetic poles arranged in the circumference direction on the outer circumference side, and each of the magnetic poles has at least one (in Figure 5, one) magnet insertion hole 50a, 50b, or 50c. The permanent magnet 70a is accommodated in the center portion of the magnet insertion hole 50a in the circumference direction in order to configure the magnetic pole, the permanent magnet 70b is accommodated in the center portion of the magnet insertion hole 50b in the circumference direction in order to configure the magnetic pole, and the permanent magnet 70c is accommodated in the center portion of the magnet insertion hole 50c in the circumference direction in order to configure the magnetic pole. Each of the magnet insertion holes 50b and 50c has a larger cross-sectional area than the permanent magnet, and the region in which each of the permanent magnets 70a to 70c is not inserted becomes a magnetic barrier 80. Like each of the apertures 60a to 60c in Figure 3, the interior of the region may be in a vacuum, or may be filled with a gas, such as air, a resin, a non-magnetic material, and the like. That is, the relative permeability of the magnetic barrier 80 is smaller than the relative permeability of the rotor core 40.

The rotor 30 of this modification example is, so to speak, a rotor in which in the modification example in Figure 3 described above, the permanent magnet 70a is inserted in the aperture 60a for the magnet insertion hole 50a, the permanent magnet 70b is inserted in the aperture 60b for the magnet insertion hole 50b, and the permanent magnet 70c is inserted in the aperture 60c for the magnet insertion hole 50c. That is, the width w1 of the magnet insertion hole 50a in the circumference direction corresponds to the aperture width w1 according to the modification example in Figure 3, the width w2 of the magnet insertion hole 50b in the circumference direction corresponds to the aperture width w2 according to the modification example in Figure 3, and the width w3 of the magnet insertion hole 50c in the circumference direction corresponds to the aperture width w3 according to the modification example in Figure 3. Therefore, in the modification example in Figure 5, between the magnet insertion hole widths w1, w2, and w3, there is a relationship in which w1 < w3 < w2.

Further, in this modification example, the permanent magnet 70a is inserted in the magnet insertion hole 50a, the permanent magnet 70b is inserted in the magnet insertion hole 50b, and the permanent magnet 70c is inserted in the magnet insertion hole 50c. Here, the permanent magnets 70a, 70b, and 70c have the same magnet width L1. That is, the number of types of the cross-sectional shapes of the permanent magnets in the partial cross-sectional shape 130 is only one. The magnet insertion hole width w1 is substantially equal to the magnet width L1. Also, the magnet insertion hole width w2 is larger than the magnet width L1, and the magnet insertion hole width w3 is also larger than the magnet width L1. In addition to such the large-and-small relationship, since, as described above, w1 < w3 < w2, the widths in the circumference direction of the magnetic barriers 80 that contact the permanent magnets 70a, 70b, and 70c are different from each other (however, for the permanent magnet 70a, the width in the circumference direction of the magnetic barrier 80 is substantially "zero").

In this way, like Example 1, in the cross section of the rotor 30 of the modification example in Figure 5, the three types of the partial cross-sectional shapes 130 that are different from each other are arranged in the circumference direction. Additionally, in the three types of the partial cross-sectional shapes 130 according to this modification example, the widths of the magnet insertion holes (w1, w2, w3) and the widths of the magnetic barriers 80 in the circumference direction are different from each other. Also, the three types of and eight partial cross-sectional shapes 130 are arranged in line symmetry with respect to the symmetry axis L in Figure 5, and are arranged in two-fold rotational symmetry with the rotation axis X as the rotation center. Like Example 1, this enables the reduction in torque pulsation without generating the rotation direction dependency of torque.

Additionally, in this modification example, in addition to reluctance torque generated by the saliency by the magnet insertion holes that are the apertures, the magnet torque by the permanent magnets 70a to 70c is generated, so that the motor torque is improved.

In this modification example, when the number of poles of the rotor 30 is defined as n (in Figure 5, n = 8), the arrangement of the cross-sectional shapes of the permanent magnets 70a to 70c may have n-fold symmetry with respect to the rotation axis X of the rotor 30. In this arrangement, the magnetomotive force distributions of the permanent magnets when the reluctance distribution of the rotor core 40 is neglected are the same in the respective partial cross-sectional shapes 130, but the reluctance distribution of the rotor core 40 is different in the different partial cross-sectional shapes 130, so that the torque pulsation can be reduced. Further, since the insertion positions of the permanent magnets 70a to 70c are the same in the respective partial cross-sectional shapes 130, the magnet positions and the magnet amounts are constant for the respective magnetic poles at inserting the permanent magnets 70a to 70c, so that the automation of the magnet insertion becomes easy in the assembling of the rotary electric machine.

Figure 6 illustrates a partial cross-sectional view of the rotor 30 in Figure 5 in the plane perpendicular to the rotation shaft.

Since the rotor 30 in Figure 5 has the permanent magnets 70a to 70c, the magnetomotive force distribution of the rotor 30 is different according to the rotor position. Accordingly, the largest magnetomotive force direction of each of the permanent magnets is defined as a d-axis, and the direction orthogonal to the d-axis at an electrical angle, that is, the direction that passes through between the adjacent magnetic barriers 80, is defined as a q-axis. That is, in each of the partial cross-sectional shapes 130, the d-axis and the q-axis can be defined. As long as the cross section of the rotor does not have an extremely distorted shape, the d-axes are in a relationship in which they are shifted at an electrical angle of 180°, and likewise, the q-axes are in a relationship in which they are shifted at an electrical angle of 180°, which is ditto for this modification example. In this modification example, the d-axis of any partial cross-sectional shape 130 that is selected can be defined as the d-axis of the rotor 30, and the q-axis of any partial cross-sectional shape 130 that is selected can be defined as the q-axis of the rotor 30.

As described above, in the cross section of the rotor 30 illustrated in Figure 5, the three or more types of the partial cross-sectional shapes 130 that are different from each other are arranged in line symmetry with respect to the symmetry axis L in Figure 5. In this case, the symmetry axis L is preferably the d-axis or the q-axis. Additionally, in this modification example, as seen from Figures 5 and 6, the symmetry axis L is the d-axis.

Next, the effect of Example 1 will be described. Additionally, the effect described below is the same for the respective modification examples described above and Example 2 described later.

Torque at a certain moment of each of the magnetic poles depends on the position relationship between the reluctance distribution of the rotor core 40 and the stator teeth 25. Also, when the rotor 30 has the permanent magnets 70a to 70c, the torque depends on the position relationship between the magnetomotive force distributions of the permanent magnets 70a to 70c and the hole stator teeth 25. In particular, a component with an order caused by slot combination, for example, a 12-order component in eight poles and 48 slots like Example 1 (Figure 2), is a main torque pulsation component, and its phase depends on the position relationship between the reluctance distribution of the rotor core 40 and the stator teeth 25, or on the position relationship between the magnetomotive force distributions of the permanent magnets 70a to 70c and the stator teeth 25. For example, in the case where the position relationships in the respective magnetic poles between the direction in which the reluctance of the rotor core 40 is minimum and the stator teeth 25 when the direction in which the reluctance of the rotor core 40 is minimum and the stator teeth 25 are opposite to each other are the same, the phases of the torque pulsation in the respective magnetic poles substantially coincide with each other. Or, in the case where the position relationships in the respective magnetic poles between the directions in which the magnetomotive forces of the permanent magnets 70a to 70c are maximum and the stator teeth 25 when the directions in which the magnetomotive forces of the permanent magnets 70a to 70c are maximum and the stator teeth 25 are opposite to each other are the same, the phases of the torque pulsation in the respective magnetic poles substantially coincide with each other.

Therefore, in the partial cross-sectional shapes 130 that are different from each other, the position relationships in the respective magnetic poles between the direction in which the reluctance of the rotor core 40 is minimum and the stator teeth 25 when the direction in which the reluctance of the rotor core 40 is minimum and the stator teeth 25 are opposite to each other are made different from each other, or the position relationships in the respective magnetic poles between the directions in which the magnetomotive forces of the permanent magnets 70a to 70c are maximum and the stator teeth 25 when the directions in which the magnetomotive forces of the permanent magnets 70a to 70c are maximum and the stator teeth 25 are opposite to each other are made different from each other, so that the phases of the torque pulsation caused by the slot combination of the respective magnetic poles can be shifted. This enables the reduction in torque pulsation. Further, in the cross section of the rotor, the number of types of the partial cross-sectional shapes 130 (Figure 2) each corresponding to one pole pitch is three or more, so that the torque pulsation can be reliably reduced.

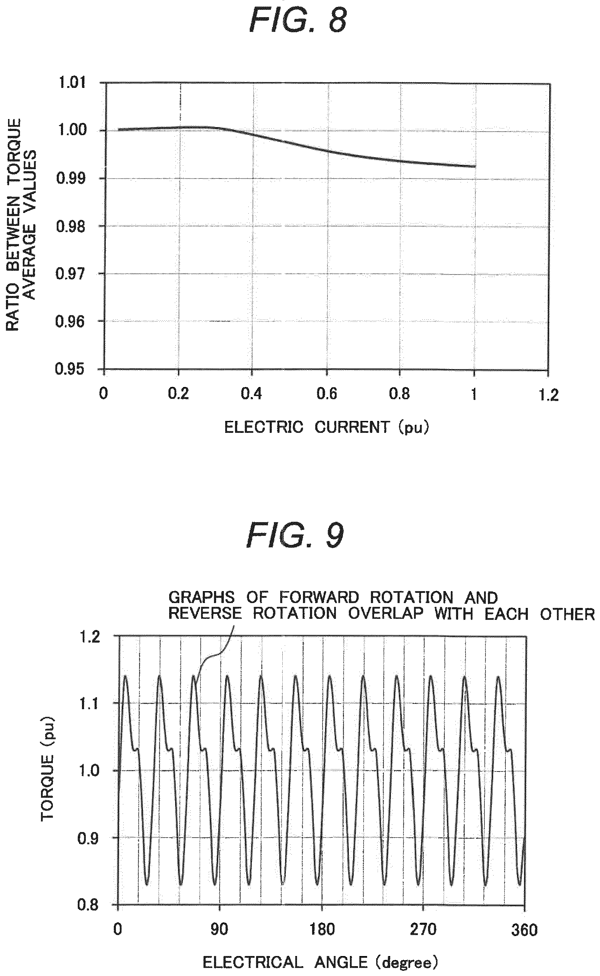

Hereinafter, the effect of Example 1 will be described with reference to Figures 8 to 15, but before that, the rotary electric machine according to a comparative example will be described first.

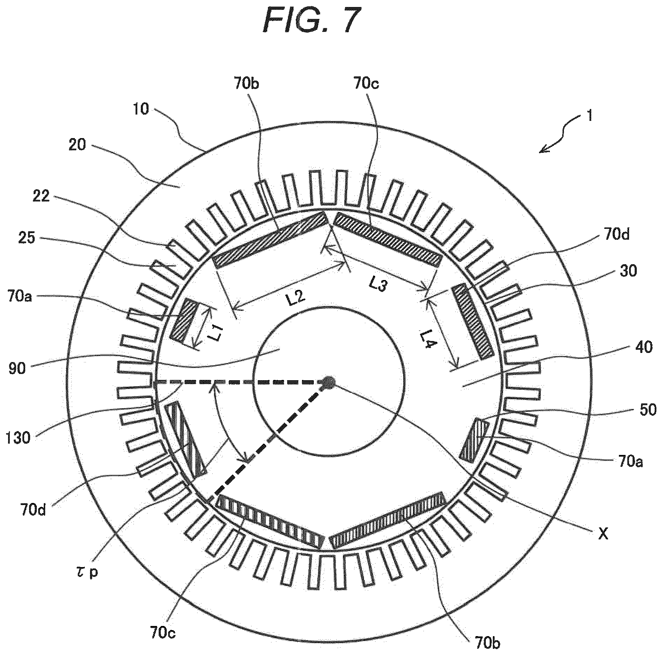

Figure 7 illustrates a cross-sectional view of the rotary electric machine according to the comparative example in the plane perpendicular to the rotation shaft.

As illustrated in Figure 7, in this comparative example, the cross section of the rotor 30 has the three or more types (in Figure 7, four types of (the magnet width L1 of the permanent magnet 70a, the magnet width L2 of the permanent magnet 70b, the magnet width L3 of the permanent magnet 70c, and the magnet width L4 of the permanent magnet 70d: L1 < L4 < L3 < L2)) of the partial cross-sectional shapes 130 that are different from each other, but the arrangement of these four types of and eight partial cross-sectional shapes 130 does not have the line symmetry.

Figures 8 to 15 described below are based on the study of the present inventors. In this study, the rotation direction dependency of torque of the comparative example (Figure 7) and the rotation direction dependency of torque of Example 1 (Figure 2) are analyzed by electromagnetic field analysis. The comparative example is the same as the example in terms of the inside and outside diameters of the stator 10, the inside and outside diameters of the rotor 30, and the shape and arrangement of the stator winding 21, and is different from the example in terms of the dimensions and arrangements of the magnet insertion holes 50 and the permanent magnets 70a to 70d. As described above, for the arrangement of the partial cross-sectional shapes 130, that is, the arrangement of the cross-sectional shapes of the permanent magnets, the comparative example does not have the line symmetry, and the example has the line symmetry. Also, in the comparative example and the example, the physical property values of the respective materials that configure the respective portions of the rotary electric machine are the same. Additionally, in the electromagnetic field analysis, torque from the light load condition of a small electric current and low torque to the heavy load condition of a large electric current and high torque is calculated in the case of forward rotation, and torque from the light load condition of a small electric current and low torque to the heavy load condition of a large electric current and high torque is calculated in the case of reverse rotation.

Figure 8 illustrates the relationship between the motor current and the ratio between torque average values according to the comparative example.

In Figure 8, the horizontal axis represents the magnitude of the electric current flowed to the stator winding 21 by a pu (per unit) value. The electric current value is normalized with the maximum current as 1. Also, the vertical axis represents the ratio between torque average values in the case of the forward rotation and in the case of the reverse rotation under the respective electric current conditions. Thus, when the ratio between torque average values is 1, the respective torque average values in the forward rotation and in the reverse rotation are the same, which means that the rotation direction dependency is not generated in the torque. Also, when the ratio between torque average values is not 1, this means that the rotation direction dependency is generated in the torque.

As illustrated in Figure 8, in the comparative example, the rotation direction dependency of torque is not generated under the light load condition in which the electric current is below 0.4 pu, but the rotation direction dependency of torque is generated under the heavy load condition in which the electric current is above 0.4 pu.

Figure 9 illustrates the torque waveforms during the light load in the forward rotation and in the reverse rotation according to the comparative example. The horizontal axis represents the electrical angle, and the vertical axis represents the torque by a pu (per unit) value. The solid line indicates the torque waveform during the forward rotation, and the dashed line indicates the torque waveform during the reverse rotation. Additionally, in Figure 9, the solid line and the dashed line overlap with each other.

As illustrated in Figure 9, in the case of the light load condition, the rotation direction dependency is not generated in the torque waveforms of the comparative example.

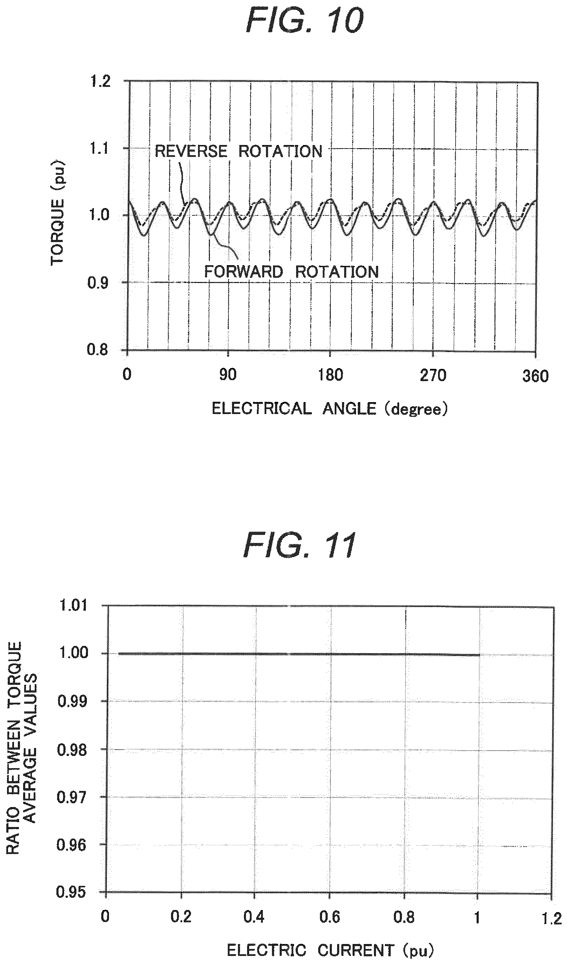

Figure 10 illustrates the torque waveforms during the heavy load in the forward rotation and in the reverse rotation according to the comparative example. The solid line indicates the torque waveform during the forward rotation, and the dashed line indicates the torque waveform during the reverse rotation.

As illustrated in Figure 10, in the case of the heavy load condition, the rotation direction dependency is generated in the torque waveforms of the comparative example.

Figure 11 illustrates the relationship between the motor current and the ratio between torque average values according to Example 1. The horizontal axis and the vertical axis are the same as Figure 8 described above.

As illustrated in Figure 11, in Example 1, the ratio between torque average values is 1 without depending on the electric current, that is, without depending on the load condition. Therefore, the rotation direction dependency of torque is not generated.

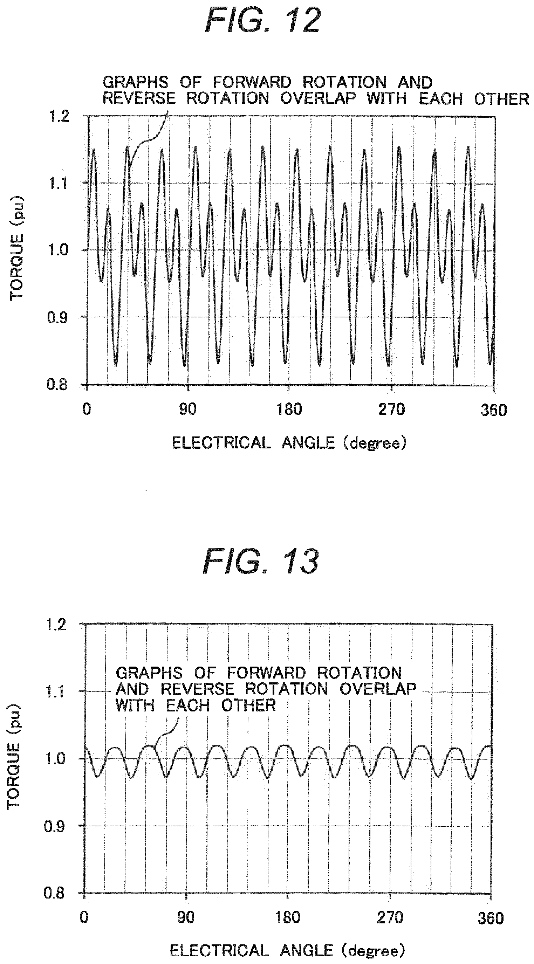

Figure 12 illustrates the torque waveforms during the light load in the forward rotation and in the reverse rotation according to Example 1. The horizontal axis and the vertical axis are the same as Figure 9 described above.

As illustrated in Figure 12, in the case of the light load condition, the rotation direction dependency is not generated in the torque waveforms of Example 1.

Figure 13 illustrates the torque waveforms during the heavy load in the forward rotation and in the reverse rotation according to Example 1.

As illustrated in Figure 13, in the case of the heavy load condition, the rotation direction dependency is not generated in the torque waveforms of Example 1.

As illustrated in Figures 11 to 13, in Example 1, the rotation direction dependency is not generated in the torque.

Additionally, according to the study of the present inventors, the cause that exhibits the rotation direction dependency of torque in the comparative example is the magnetic saturation of the rotor core 40 between the permanent magnets 70a to 70c. The absence of the line symmetry in the shape of the cross section of the rotor causes even the magnetic fluxes created by the electric current having the same magnitude to be less likely to pass in the regions in which the intervals between the permanent magnets 70a to 70c are narrow, due to the proceeding of the magnetic saturation of the rotor core 40, as compared with in the regions in which the intervals between the permanent magnets 70a to 70c are wide. Therefore, depending on whether the intervals between the permanent magnets 70a to 70c on the side on which the magnetic fluxes generated by the electric current concentrate are narrow or wide, the torque has the rotation direction dependency.

On the contrary, according to the study of the present inventors, in Example 1, complementarily, the magnetic flux distribution during the forward rotation appears in one semicircular region (hereinafter, referred to as a region A) in the cross section of the rotor in which the symmetry axis L is a boundary, and the magnetic flux distribution during the reverse rotation appears in the other semicircular region (hereinafter, referred to as a region B) in the cross section of the rotor in which the symmetry axis L is a boundary. That is, the magnetic flux distribution in the region A during the forward rotation and the magnetic flux distribution in the region B during the reverse rotation have the line symmetry with respect to the symmetry axis L. Thus, the rotation direction dependency of torque is not generated.

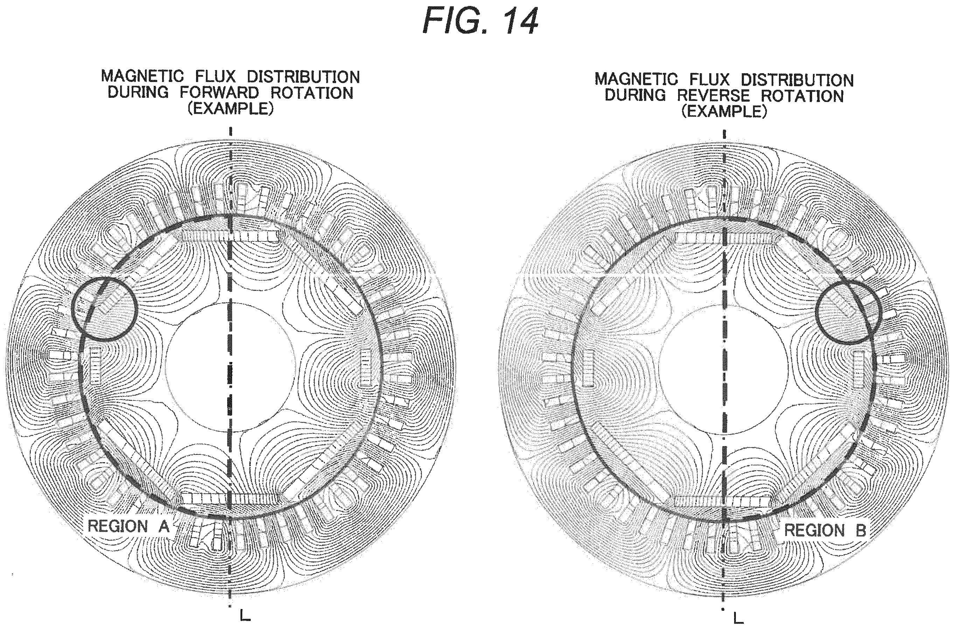

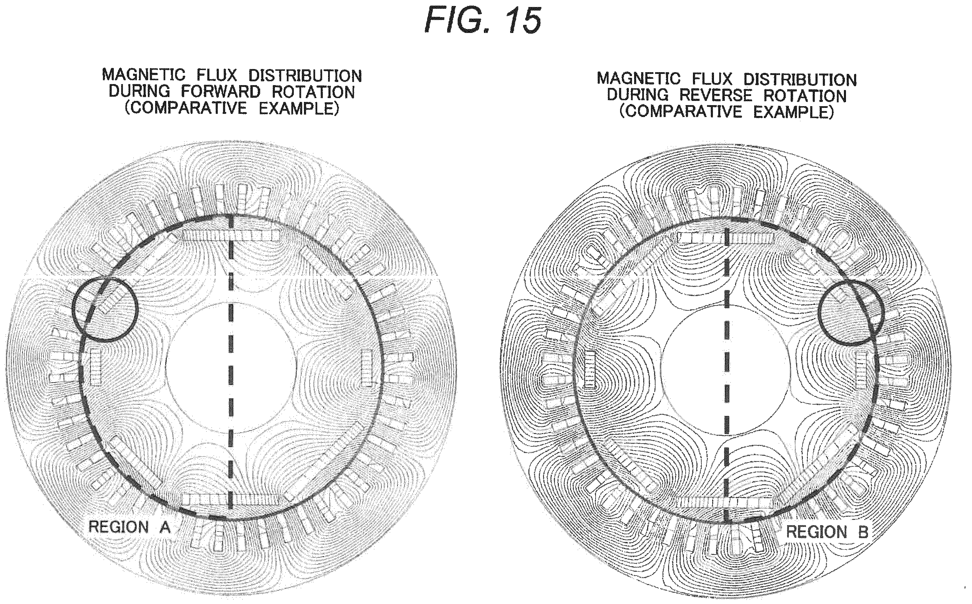

Examples of the magnetic flux distributions as described above are illustrated in Figures 14 and 15. Additionally, the magnetic flux distributions illustrated in Figures 14 and 15 are based on the study of-the present inventors like Figures 8 to 13.

Figure 14 illustrates the magnetic flux distributions of Example 1 during the forward rotation and during the reverse rotation.

As illustrated in Figure 14, the magnetic flux distribution of the region A of the rotor during the forward rotation (the semicircular region on the left side in the drawing in which the symmetry axis L is the boundary) and the magnetic flux distribution of the region B of the rotor during the reverse rotation (the semicircular region on the right side in the drawing in which the symmetry axis L is the boundary) are complementary. For example, when for the region A and the region B, the regions surrounded by the small circles indicated by the solid lines are compared, the states of the magnetic flux distributions in both the regions are the same.

Figure 15 illustrates the magnetic flux distributions of the comparative example during the forward rotation and during the reverse rotation.

As illustrated in Figure 15, the magnetic flux distribution of the region A of the rotor during the forward rotation (the semicircular region on the left side in the drawing in which the symmetry axis L is the boundary) and the magnetic flux distribution of the region B of the rotor during the reverse rotation (the semicircular region on the right side in the drawing in which the symmetry axis L is the boundary) are not complementary. For example, when for the region A and the region B, the regions surrounded by the small circles indicated by the solid lines are compared, the states of the magnetic flux distributions of both the regions are different from each other.

As described above, according to Example 1, the reduction in torque pulsation is enabled without generating the rotation direction dependency of torque.

Also, according to Example 1, cogging torque can be reduced, and a no-load induced electromotive force can be converted to a sine wave. By converting the no-load induced electromotive force to the sine wave, harmonic loss caused by the configuration of the rotary electric machine, such as the slot combination, can be reduced, so that the efficiency of the rotary electric machine can be improved.

### <Example 2>

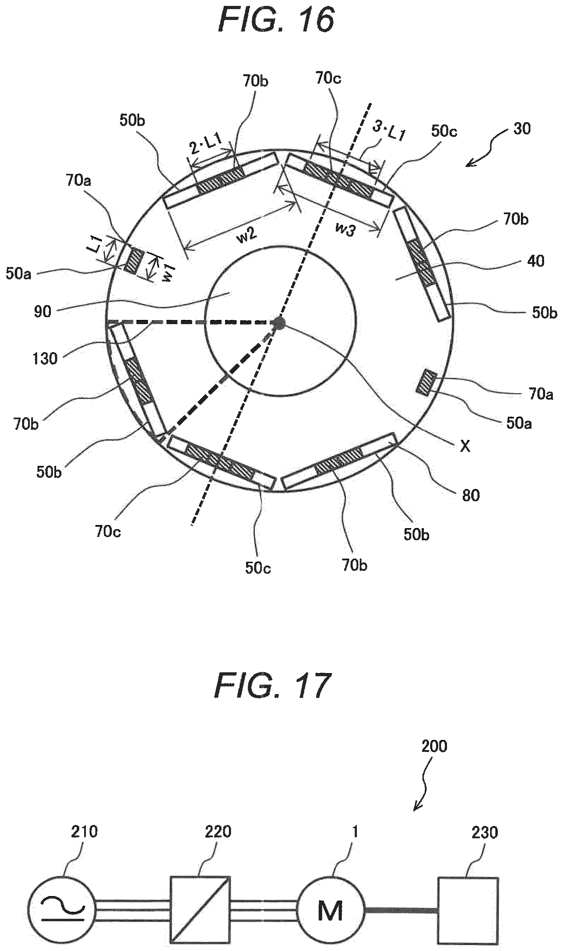

Figure 16 is a cross-sectional view of the rotor 30 of the rotary electric machine according to Example 2 of the present invention in the plane perpendicular to the rotation shaft. The rotary electric machine of Example 2 is the interior permanent magnet synchronous motor that is of the inner rotor type. The point that is different from Example 1 and its modification example will be mainly described below.

As illustrated in Figure 16, the rotor 30 in Example 2 includes the rotor core 40 including a magnetic material, and the shaft 90 that is the rotation shaft of the rotor 30 and penetrates through the rotor core 40. Also, the rotor 30 has an even number of (in Figure 16, eight) and six or more (in Figure 16, eight) magnetic poles arranged in the circumference direction on the outer circumference side, and each of the magnetic poles has at least one (in Figure 16, one) magnet insertion hole 50a, 50b, or 50c. The permanent magnet 70a is accommodated in the center portion of the magnet insertion hole 50a in the circumference direction in order to configure the magnetic pole, the permanent magnet 70b is accommodated in the center portion of the magnet insertion hole 50b in the circumference direction in order to configure the magnetic pole, and the permanent magnet 70c is accommodated in the center portion of the magnet insertion hole 50c in the circumference direction in order to configure the magnetic pole. The magnet insertion hole 50b has a larger cross-sectional area than the permanent magnet, so that the region in which the permanent magnet 70 is not inserted becomes the magnetic barrier 80, and the magnet insertion hole 50c has a larger cross-sectional area than the permanent magnet, so that the region in which the permanent magnet 70 is not inserted becomes the magnetic barrier 80.

The rotor 30 in Example 2 is, so to speak, a rotor in which the magnet widths of the permanent magnets 70a to 70c are made different from each other in the modification example in Figure 5. That is, between the magnet insertion hole widths w1, w2, and w3, there is a relationship in which w1 < w3 < w2, and the magnet widths of the permanent magnets 70a, 70b, and 70c are L1, 2·L1, 3·L1, respectively. Here, the permanent magnets 70a, 70b, and 70c include unit permanent magnets in which the magnet width is L1. That is, the permanent magnet 70a includes one unit permanent magnet, the permanent magnet 70b includes two unit permanent magnets, and the permanent magnet 70c includes three unit permanent magnets.

In this way, like Example 1, in the cross section of the rotor 30 in Example 2, the three types of the partial cross-sectional shapes 130 that are different from each other are arranged in the circumference direction. Additionally, in the three types of the partial cross-sectional shapes 130 according to this example, the widths (w1, w2, w3) of the magnet insertion holes, the magnet widths (L1, 2.L1, 3·L1), and the widths of the magnetic barriers 80 in the circumference direction are different from each other. Also, the three types of and eight partial cross-sectional shapes 130 are arranged in line symmetry with respect to the symmetry axis L in Figure 16, and are arranged in two-fold rotational symmetry with the rotation axis X as the rotation center. Like Example 1, this enables the reduction in torque pulsation without generating the rotation direction dependency of torque.

Additionally, in Example 2, the rotor 30 is provided with the permanent magnets 70a to 70c, thereby improving the torque. Also, the permanent magnets 70a, 70b, and 70c include the unit permanent magnets having the same magnet width (L1), thereby making the adjustment of the magnet torque easy, and the manufacturing cost of the permanent magnets 70a to 70c can be reduced, thereby making it possible to reduce the manufacturing cost of the rotary electric machine 1.

### <Example 3>

Figure 17 illustrates the schematic configuration of a rotary electric motor drive system according to Example 3 of the present invention.

In Example 3, as the rotary electric machine 1 in Figure 17, any- one of the rotary electric machine of Example 1, the rotary electric machine of its modification example, and the rotary electric machine of Example 2 described above is applied.

In a rotary electric motor drive system 200 in Figure 17, the electric power for driving the rotary electric machine 1 is supplied from a power supply 210 via a power converter 220 including an inverter, a converter, and the like. In this case, the output control according to a load 230 driven by the rotary electric machine 1 is enabled by the power converter 220.

In the rotary electric machine by the conventional technique and the comparative example (Figure 7) described above, the torque pulsation is likely to occur, so that when the torque pulsation occurs, the torque control typically executes control to flow the electric current so as to cancel the torque pulsation. The torque pulsation occurs as a high order pulsation component, so that to cause the control to follow this, the highly responsive power converter 220 is required, thereby increasing the cost of the power converter 220. Also, the harmonic current for reducing the torque pulsation is injected, so that the switching loss in the power converter 220 and the harmonic loss caused in the rotary electric machine 1 are increased, thereby leading to the lowering of the system efficiency. Also in the speed control, when the inertia moment of the rotor is small, the torque pulsation leads to speed variation, so that as in the case of during the torque control, the highly responsive power converter 220 is required, and the system efficiency is lowered.

On the contrary, in Example 3, the rotary electric machine 1 of Example 1, the rotary electric machine 1 of its modification example, and the rotary electric machine 1 of Example 2 are applied, so that the torque pulsation of the rotary electric machine 1 can be reduced. Thus, in both the control methods of the torque control and the speed control, the highly responsive power converter 220 is not required. Also, the switching loss in the power converter 220 and the harmonic loss caused in the rotary electric machine 1 can be reduced, so that the system efficiency of the rotary electric motor drive system 200 is improved. Also, in the case of the position control, the lowering of the controllability due to the torque pulsation is not caused, so that the high precision position control is enabled with respect to various loads.

Further, in the rotary electric machine by the conventional technique and the comparative example (Figure 7) described above, the rotation direction dependency of torque is generated according to the load condition, so that a control parameter is required to be set with respect to each of the rotation directions of the rotary electric machine 1.

On the contrary, in Example 3, since the rotation direction dependency of torque is not generated in the rotary electric machine 1, the control parameter of the rotary electric machine 1 is set for one direction, which is enough. Thus, the memory consumption of the control device of the power converter 220 can be reduced, and the configuration of the control device can be simplified, so that the cost of the power converter 220 can be lowered. This enables reduction in the system cost of the rotary electric motor drive system 200.

### <Example 4>

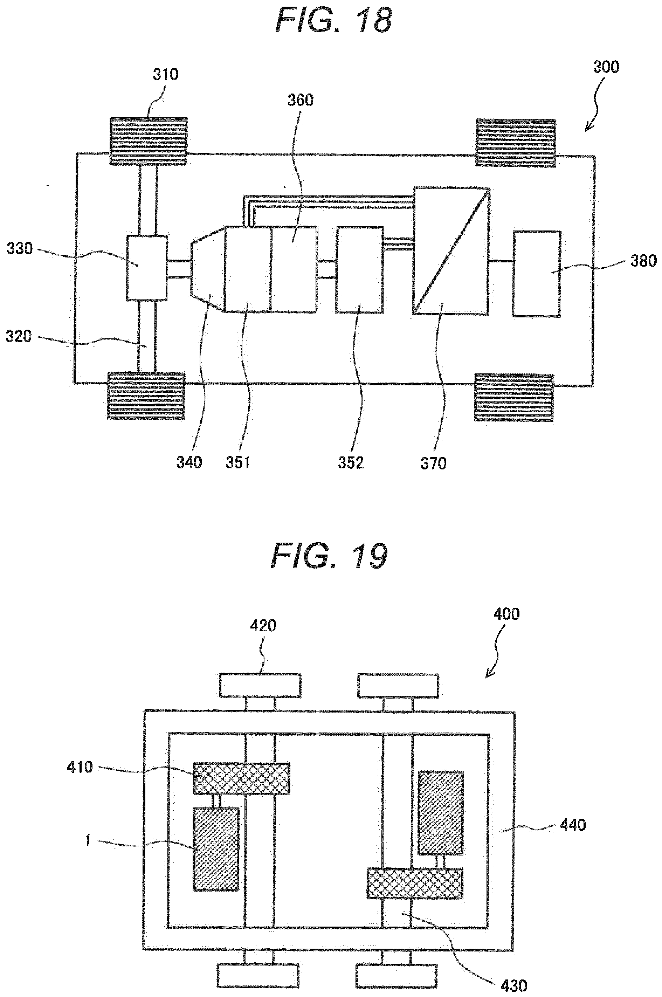

Figure 18 illustrates the schematic configuration of an electric automobile according to Example 4 of the present invention.

In Example 4, as rotary electric machines 351 and 352 in Figure 18, any one of the rotary electric machine of Example 1, the rotary electric machine of its modification example, and the rotary electric machine of Example 2 is applied.

As illustrated in Figure 18, an engine 360, the rotary electric machines 351 and 352, and a battery 380 are mounted on an electric automobile 300.

When driving the rotary electric machines 351 and 352, the battery 380 supplies DC power to a power converter 370 (inverter device) for driving the rotary electric machines 351 and 352. The power converter 370 converts the DC power from the battery 380 to AC power, and supplies the AC power to each of the rotary electric machines 351 and 352.

Also, during regenerative traveling, the rotary electric machines 351 and 352 generate AC power according to the kinetic energy of the vehicle, and supply the AC power to the power converter 370. The power converter 370 converts the AC power from the rotary electric machines 351 and 352 to DC power, and supplies the DC power to the battery 380.

The rotation torque from the engine 360 and the rotary electric machines 351 and 352 is transmitted to a wheel 310 via a transmission 340, a differential gear 330, and an axel 320. The present invention is not limited to such the configuration of Example 4, and various torque transmission configurations that transmit the rotation torque of the rotary electric machines 351 and 352 (or one of them) to the wheel are applicable.

In Example 5, the reduction in torque pulsation of the rotary electric machines 351 and 352 is enabled. Thus, noise and vibration caused by the torque pulsation of the rotary electric machines 351 and 352 can be reduced, so that the ride comfort of the electric automobile 300 can be improved. Also, by reducing the torque pulsation of the rotary electric machines 351 and 352, mechanical impact imparted to the transmission 340 and the differential gear 330 can be reduced. This enables the reliability improvement and the longer life of the electric automobile 300. Also, the harmonic current injection for reducing the torque pulsation is not required, and the system efficiency of the electric automobile 300 is improved, so that the driving range of the electric automobile 300 can be increased.

Also, the rotation direction dependency of torque in the rotary electric machines 351 and 352 is not present, so that also during backward driving, the reduction in torque pulsation that is the same as during forward driving and the reduction in noise and vibration caused by the torque pulsation are enabled.

### <Example 5>

Figure 19 illustrates the schematic configuration of an electric railway vehicle according to Example 5 of the present invention.

In Example 5, as the rotary electric machine 1 in Figure 18, any one of the rotary electric machine of Example 1, the rotary electric machine of its modification example, and the rotary electric machine of Example 2 is applied.

As illustrated in Figure 18, an electric railway vehicle 400 is provided with a gear 410, a wheel 420, an axel 430, and a truck 440 provided with the rotary electric machine 1. The rotary electric machine 1 drives the wheel 420 connected to the axel 430 via the gear 410. Additionally, although this example is described by an example in which two rotary electric machines 1 are mounted, the present invention is not limited to this, and one or three or more rotary electric machines 1 may be mounted.

In Example 6, the reduction in torque pulsation of the rotary electric machine 1 is enabled, so that without depending on the passenger occupancy rate, noise and vibration caused by the torque pulsation of the rotary electric machine 1 can be reduced. Thus, the ride comfort of the electric railway vehicle 400 is improved. Also, by reducing the torque pulsation of the rotary electric machine 1, mechanical impact imparted to the gear 410 can be reduced, so that the reliability improvement and the longer life of the electric railway vehicle 400 are enabled. Also, the harmonic current injection for reducing the torque pulsation is not required, so that the system efficiency of the electric railway vehicle 400 is improved.

Also, the rotation direction dependency of torque is not present in the rotary electric machine 1, so that also when the traveling direction of the train is reverse, the reduction in torque pulsation and the reduction in noise and vibration caused by the torque pulsation are enabled.

Additionally, the present invention is not limited to the above examples, and includes various modification examples. For example, the above examples have been described in detail to simply describe the present invention, and are not necessarily required to be provided with all the described configurations. Also, part of the configuration of each of the examples can be subjected to addition, deletion, and replacement with respect to other configurations.

For example, the rotary electric machine of Example 1, the rotary electric machine of its modification example, and the rotary electric machine of Example 2 are applicable, not only to the electric automobile and the electric railway vehicle, but also to other electric vehicles.

Also, like Example 1, its modification example, and Example 2, the shape of the cross section of the rotor having the line symmetry is applicable to an outer rotor type permanent magnet synchronous motor and a surface permanent magnet synchronous motor.

### Reference Signs List

- 1: rotary electric machine,
- 5: frame,
- 10: stator,
- 20: stator core,
- 21: stator winding,
- 22: stator slot,
- 25: stator teeth,
- 30: rotor,
- 40: rotor core,
- 50a, 50b, 50c: magnet insertion hole,
- 60a, 60b, 60c: aperture,
- 70a, 70b, 70c, 70d: permanent magnet,
- 80: magnetic barrier,
- 90: shaft,
- 130: partial cross-sectional shape,
- 200: rotary electric motor drive system,
- 210: power supply,
- 220: power converter,
- 230: load,
- 300: electric automobile,
- 310: wheel,
- 320: axel,
- 330: differential gear,
- 340: transmission,
- 351, 352: rotary electric machine,
- 360: engine,
- 370: power converter,
- 380: battery,
- 400: electric railway vehicle,
- 410: gear,
- 420: wheel,
- 430: axel,
- 440: truck

## Claims

1. A rotary electric machine (1) comprising:
a stator (10); and
a rotor (30) that opposes the stator (10),
wherein the number of poles of the rotor (30) is six or more,
wherein a cross-sectional shape of the rotor (30) is configured such that partial core cross-sectional shapes (130) each corresponding to one pole pitch are arranged for the number of poles,
wherein the partial core cross-sectional shapes (130) for the number of poles have respective apertures (60a-60c),
wherein the rotor (30) has saliency by configuring salient portions between the apertures (60a-60c),
wherein the rotor (30) includes three or more different types of the partial core cross-sectional shapes (130), and
wherein the cross-sectional shape of the rotor (30) has line symmetry,
**characterized in that** widths in the circumference direction of the apertures (60a-60c) of the three or more different types are different from each other.

2. The rotary electric machine (1) according to claim 1,
wherein the rotor (30) has permanent magnets (70a, 70b, 70c, 70d) located in the apertures.

3. The rotary electric machine (1) according to claim 2,
wherein in the three or more different types of the partial core cross-sectional shapes, cross-sectional shapes of the permanent magnets (70a, 70b, 70c, 70d) with which the core of the rotor (30) is provided are different from each other.

4. The rotary electric machine (1) according to claim 3,
wherein the widths in the circumference direction of the permanent magnets (70a, 70b, 70c, 70d) in the cross-sectional shapes of the permanent magnets (70a, 70b, 70c, 70d) are different from each other.

5. The rotary electric machine (1) according to claim 1,
wherein when a direction in which reluctance between the apertures is minimum is a d-axis, and a direction orthogonal to the d-axis at an electrical angle is a q-axis, a symmetry axis of the cross-sectional shape of the rotor (30) is the d-axis or the q-axis.

6. The rotary electric machine (1) according to any one of claims 2 to 4,
wherein when a maximum magnetomotive force direction of each of the permanent magnets (70a, 70b, 70c, 70d) is a d-axis, and a direction orthogonal to the d-axis in an electrical angle is a q-axis, the symmetry axis of the cross-sectional shape of the rotor (30) is the d-axis or the q-axis.

7. The rotary electric machine (1) according to claim 2,
wherein in the three or more types of the partial core cross-sectional shapes, the number of types of cross-sectional shapes of the permanent magnets (70a, 70b, 70c, 70d) is one.

8. The rotary electric machine (1) according to claim 2,
wherein when the number of poles of the rotor (30) is n, an arrangement of the cross-sectional shapes of the permanent magnets (70a, 70b, 70c, 70d) has n-fold symmetry with respect to a rotation axis of the rotor (30).

9. The rotary electric machine (1) according to claim 3 or 4,
wherein each of the permanent magnets (70a, 70b, 70c, 70d) includes one or more unit permanent magnets (70a, 70b, 70c, 70d).

10. A rotary electric motor drive system (200) comprising:
a rotary electric machine (1) that drives a load; and
a power converter that drives the rotary electric machine (1),
wherein the rotary electric machine (1) is the rotary electric machine (1) according to claim 1.

11. An electric automobile (300) comprising:
a rotary electric machine (1);
a battery (380); and
a power converter (370) that converts DC power of the battery to AC power and supplies the AC power to the rotary electric machine (1), the torque of the rotary electric machine (1) being transmitted to a wheel (420) via a transmission,
wherein the rotary electric machine (1) is the rotary electric machine (1) according to claim 1.

12. An electric railway vehicle comprising:
a rotary electric machine (1); and
a wheel (420) that is driven by the rotary electric machine (1) via a gear,
wherein the rotary electric machine (1) is the rotary electric machine (1) according to claim 1.

## Patentansprüche

1. Rotierende elektrische Maschine (1), die Folgendes umfasst:
einen Stator (10); und
einen Rotor (30), der dem Stator (10) gegenüberliegt,
wobei die Anzahl der Pole des Rotors (30) sechs oder mehr ist,
wobei eine Querschnittsform des Rotors (30) derart konfiguriert ist, dass Teilkern-Querschnittsformen (130), die jeweils einer Polteilung entsprechen, für die Anzahl der Pole angeordnet sind,
wobei die Teilkern-Querschnittsformen (130) für die Anzahl der Pole jeweilige Öffnungen (60a-60c) aufweisen,
wobei der Rotor (30) durch das Konfigurieren vorstehender Abschnitte zwischen den Öffnungen (60a-60c) vorsteht,
wobei der Rotor (30) drei oder mehr verschiedene Arten der Teilkern-Querschnittsformen (130) enthält, und
wobei die Querschnittsform des Rotors (30) eine Liniensymmetrie aufweist,
**dadurch gekennzeichnet, dass** die Breiten in der Umfangsrichtung der Öffnungen (60a-60c) der drei oder mehr verschiedenen Arten voneinander verschieden sind.

2. Rotierende elektrische Maschine (1) nach Anspruch 1,
wobei der Rotor (30) Permanentmagneten (70a, 70b, 70c, 70d) aufweist, die in den Öffnungen angeordnet sind.

3. Rotierende elektrische Maschine (1) nach Anspruch 2,
wobei bei den drei oder mehr verschiedenen Arten der Teilkern-Querschnittsformen die Querschnittsformen der Permanentmagneten (70a, 70b, 70c, 70d), mit denen der Kern des Rotors (30) versehen ist, voneinander verschieden sind.

4. Rotierende elektrische Maschine (1) nach Anspruch 3,
wobei die Breiten in der Umfangsrichtung der Permanentmagneten (70a, 70b, 70c, 70d) in den Querschnittsformen der Permanentmagneten (70a, 70b, 70c, 70d) voneinander verschieden sind.

5. Rotierende elektrische Maschine (1) nach Anspruch 1,
wobei dann, wenn eine Richtung, in der ein magnetischer Widerstand zwischen den Öffnungen minimal ist, eine d-Achse ist und eine Richtung senkrecht zur d-Achse unter einem elektrischen Winkel eine q-Achse ist, eine Symmetrieachse der Querschnittsform des Rotors (30) die d-Achse oder die q-Achse ist.

6. Rotierende elektrische Maschine (1) nach einem der Ansprüche 2 bis 4,
wobei dann, wenn eine Richtung einer maximalen magnetomotorischen Kraft von jedem der Permanentmagneten (70a, 70b, 70c, 70d) eine d-Achse ist und eine Richtung senkrecht zur d-Achse unter einem elektrischen Winkel eine q-Achse ist, die Symmetrieachse der Querschnittsform des Rotors (30) die d-Achse oder die q-Achse ist.

7. Rotierende elektrische Maschine (1) nach Anspruch 2,
wobei bei den drei oder mehr Arten von Teilkern-Querschnittsformen die Anzahl der Arten der Querschnittsformen der Permanentmagneten (70a, 70b, 70c, 70d) eins ist.

8. Rotierende elektrische Maschine (1) nach Anspruch 2,
wobei dann, wenn die Anzahl der Pole des Rotors (30) n ist, eine Anordnung der Querschnittsformen der Permanentmagneten (70a, 70b, 70c, 70d) eine n-fache Symmetrie in Bezug auf eine Drehachse des Rotors (30) aufweist.

9. Rotierende elektrische Maschine (1) nach Anspruch 3 oder 4,
wobei jeder der Permanentmagneten (70a, 70b, 70c, 70d) einen oder mehrere Einheitspermanentmagneten (70a, 70b, 70c, 70d) enthält.

10. Antriebssystem (200) mit einem rotierenden Elektromotor, das Folgendes umfasst:
eine rotierende elektrische Maschine (1), die eine Last antreibt; und
einen Leistungsumsetzer, der die rotierende elektrische Maschine (1) antreibt,
wobei die rotierende elektrische Maschine (1) die rotierende elektrische Maschine (1) nach Anspruch 1 ist.

11. Elektrokraftfahrzeug (300), das Folgendes umfasst:
eine rotierende elektrische Maschine (1);
eine Batterie (380); und
einen Leistungsumsetzer (370), der eine Gleichstromleistung der Batterie in eine Wechselstromleistung umsetzt und die Wechselstromleistung der rotierenden elektrischen Maschine (1) zuführt, wobei das Drehmoment der rotierenden elektrischen Maschine (1) über ein Getriebe zu einem Rad (420) übertragen wird,
wobei die rotierende elektrische Maschine (1) die rotierende elektrische Maschine (1) nach Anspruch 1 ist.

12. Elektrisches Schienenfahrzeug, das Folgendes umfasst:
eine rotierende elektrische Maschine (1); und
ein Rad (420), das durch die rotierende elektrische Maschine (1) über ein Getriebe angetrieben wird,
wobei die rotierende elektrische Maschine (1) die rotierende elektrische Maschine (1) nach Anspruch 1 ist.

## Revendications

1. Machine électrique rotative (1) comprenant :
un stator (10) ; et
un rotor (30) qui est en opposition au stator (10),
dans laquelle le nombre de pôles du rotor (30) est de six ou plus,
dans laquelle une forme de section transversale du rotor (30) est configurée de telle sorte que des formes de section transversale de noyau partielles (130) correspondant chacune à un pas polaire sont agencées pour le nombre de pôles,
dans laquelle les formes de section transversale de noyau partielles (130) pour le nombre de pôles ont des ouvertures respectives (60a-60c),
dans laquelle le rotor (30) présente une saillie par configuration de portions en saillie entre les ouvertures (60a-60c),
dans laquelle le rotor (30) inclut trois, ou plus, différents types de formes de section transversale du noyau partielles (130), et
dans laquelle la forme de section transversale du rotor (30) présente une symétrie linéaire,
**caractérisée en ce que** des largeurs dans la direction circonférentielle des ouvertures (60a-60c) des trois, ou plus, différents types sont différentes les unes des autres.

2. Machine électrique rotative (1) selon la revendication 1,
dans laquelle le rotor (30) a des aimants permanents (70a, 70b, 70c, 70d) situées dans les ouvertures.

3. Machine électrique rotative (1) selon la revendication 2,
dans laquelle, dans les trois, ou plus, différents types de formes de section transversale de noyau partielles, des formes de section transversale des aimants permanents (70a, 70b, 70c, 70d) dont est doté le noyau du rotor (30) sont différentes les unes des autres.

4. Machine électrique rotative (1) selon la revendication 3,
dans laquelle les largeurs dans la direction circonférentielle des aimants permanents (70a, 70b, 70c, 70d) dans les formes de section transversale des aimants permanents (70a, 70b, 70c, 70d) sont différentes les unes des autres.

5. Machine électrique rotative (1) selon la revendication 1,
dans laquelle, quand une direction dans laquelle une réluctance entre les ouvertures est minimum est un axe d, et une direction orthogonale à l'axe d au niveau d'un angle électrique est un axe q, un axe de symétrie de la forme de section transversale du rotor (30) est l'axe d ou l'axe q.

6. Machine électrique rotative (1) selon l'une quelconque des revendications 2 à 4,
dans laquelle, quand une direction de force magnétomotrice maximum de chacun des aimants permanents (70a, 70b, 70c, 70d) est un axe d, et une direction orthogonale à l'axe d dans un angle électrique est un axe q, l'axe de symétrie de la forme de section transversale du rotor (30) est l'axe d ou l'axe q.

7. Machine électrique rotative (1) selon la revendication 2,
dans laquelle, dans les trois, ou plus, types de formes de section transversale du noyau partielles, le nombre de types de formes de section transversale des aimants permanents (70a, 70b, 70c, 70d) est de un.

8. Machine électrique rotative (1) selon la revendication 2,
dans laquelle, quand le nombre de pôles du rotor (30) est n, un agencement des formes de section transversale des aimants permanents (70a, 70b, 70c, 70d) présente une symétrie n fois par rapport à un axe de rotation du rotor (30).

9. Machine électrique rotative (1) selon la revendication 3 ou 4,
dans laquelle chacun des aimants permanents (70a, 70b, 70c, 70d) inclut une ou plusieurs unités d'aimants permanents (70a, 70b, 70c, 70d).

10. Système d'entraînement de moteur électrique rotatif (200) comprenant :
une machine électrique rotative (1) qui entraîne une charge ; et
un convertisseur de puissance qui entraîne la machine électrique rotative (1),
dans lequel la machine électrique rotative (1) est la machine électrique rotative (1) selon la revendication 1.

11. Automobile électrique (300) comprenant :
une machine électrique rotative (1) ;
une batterie (380) ; et
un convertisseur de puissance (370) qui convertit une puissance CC de la batterie en puissance CA, et qui alimente la puissance CA à la machine électrique rotative (1), le couple de la machine électrique rotative (1) étant transmis à une roue par l'intermédiaire d'une transmission,
dans lequel la machine électrique rotative (1) est la machine électrique rotative (1) selon la revendication 1.

12. Véhicule ferroviaire électrique comprenant :
une machine électrique rotative (1) ; et
une roue (420) qui est entraînée par la machine électrique rotative (1) via un engrenage,
dans lequel la machine électrique rotative (1) est la machine électrique rotative (1) selon la revendication 1.
